# EUROPEAN PATENT APPLICATION

(11) **EP 3 422 345 A1**
(43) Date of publication of application: **02.01.2019**
(21) Application number: 17178420.0
(22) Date of filing: 28.06.2017
(51) Int. Cl.: G10L 15/26, G06F 17/28, G06F 17/30

(54) **GENERATING CONVERSATION CONTENT FOR COMMUNICATION WITH A USER**

(71) Applicant: Koninklijke Philips N.V., 5656 AE Eindhoven (NL)
(72) Inventor: SISODIA, Rajendra Singh, 5656 AE Eindhoven (NL); VAN HALTEREN, Aart Tijmen, 5656 AE Eindhoven (NL)
(74) Representative: de Haan, Poul Erik

(57) **Abstract**

There is provided a system for generating conversation content for communication with a user. The system includes a context determination module for determining a context of a conversation to be held with the user; a goal determination module for determining at least one goal to be set for the user; a content selection module for selecting a set of conversation content elements for communication to the user in the conversation, based on the determined context and the at least one determined goal; and a sequencing module for determining a first order in which the conversation content elements are to be presented to the user, based at least on the determined goal. A method, apparatus and computing device are also disclosed.

## Description

### TECHNICAL FIELD OF THE INVENTION

The invention relates to generating conversation content for communication with a user, and particularly to generating conversation content with the intention of providing the user with a goal.

### BACKGROUND OF THE INVENTION

Computer programs which enable computing devices to engage in a conversation with a human user are sometimes referred to as artificial conversational entities or chatbots. Such a chatbot may employ an artificial intelligence (AI)-based system which uses natural language processing techniques to generate conversation in real time based on the inputs and responses provided by the human user. In other existing systems, a chatbot's input to the conversation may be pre-scripted, such that the conversation follows a defined dialogue flow based on standard questions and answers.

In AI-based systems, it can be difficult to progress the conversation in relation to a particular context, as each user response may lead the conversation away from the context. In a pre-scripted system, it can be easier to progress the conversation in line with an intended context, but the dialogue can become repetitive as the system has a limited number of inputs into the conversation. A user of such a repetitive system may lose interest in participating in the conversation.

It would be desirable, therefore, to have an improved system capable of generating conversational content that can be communicated to a user, which addresses some of the issues identified with existing systems.

### SUMMARY OF THE INVENTION

It can be difficult for an artificial conversational entity to converse with a human user in a convincing and dynamic manner in relation to a particular topic or context. An input into the conversation by the human user may cause the conversation to diverge from the intended context or subject of the conversation. Furthermore, it can be difficult for an artificial conversational entity to reach an intended pre-defined endpoint of a conversation, or achieve a defined goal, as the conversation may diverge from the intended endpoint. Embodiments of the present invention provide a system which defines the goal and generates conversation content based on pre-scripted content which can be presented in different ways and in different orders, depending, for example, on the context of the conversation and on the goal to be achieved.

According to a first aspect of the invention, there is provided a system for generating conversation content for communication with a user. The system comprises a context determination module for determining a context of a conversation to be held with the user; a goal determination module for determining at least one goal to be set for the user; a content selection module for selecting a set of conversation content elements for communication to the user in the conversation, based on the determined context and the at least one determined goal; and a sequencing module for determining a first order in which the conversation content elements are to be presented to the user, based at least on the determined goal.

Such a system is able to generate a dynamic conversation which can be adapted to cater for a range of user responses, but which is able to focus on a particular context, and progress towards an intended goal.

In some embodiments, the system may further comprise a user behavior modification module for determining a technique for modifying a behavior of the user. The determined behavior modification technique may be used by at least one of: the content selection module in selecting the set of conversation content elements, and the sequencing module in determining the first order of the conversation content elements.

By selecting the content and order of the conversation based on a behavior modification technique for the user, the conversation can be more targeted and appropriate for achieving the intended goal. With knowledge of how the user reacts to particular information or in particular situations, the system can respond appropriately so as to increase the likelihood that the goal will be achieved as quickly as possible.

The system may further comprise a delivery module for delivering the selected set of conversation content elements and an indication of the determined first order, for presentation to the user. In this way, all "online" processing (e.g. processing that requires access to a database or to the internet) may be performed by the system, and the content of the conversation may be delivered to the user, who might be located remote to the system.

The context determination module may, in some embodiments, be configured to determine the context of the conversation based on at least one of: a user profile of the user and the nature of a trigger event. The trigger event may be an event which prompts the system to initiate a conversation with the user, such as an event occurring (or not occurring) as part of a clinical program or a coaching plan associated with the user. By making use of a user profile, information relevant to the user may be taken into account, thereby increasing the likelihood of achieving the goal as a result of the conversation.

In some embodiments, the sequencing module may be configured to determine the first order of the conversation content elements based on at least one of: the determined context, and a user profile associated with the user.

The system may further comprise a user input analysis module for analyzing a received user input. In some embodiments, the sequencing module maybe configured to determine a second order of the conversation content elements based on the analyzed user input. Thus, if the user responds during the conversation in such a way that the originally-planned flow of the conversation should be changed, then a revised order maybe prepared.

The goal determination module may be configured to determine a plurality of goals for the user. In some embodiments, the sequencing module may be configured to arrange the conversation content elements into an order different from the first order when a first goal of the plurality of goals has been communicated to the user. The plurality of goals may, in some embodiments, comprise intents which are intended to be achieved as the conversation progresses towards the final goal.

According to a second aspect of the invention, there is provided a computer-implemented method for generating conversation content for communication with a user. The method comprises determining a context of a conversation to be held with the user; determining a goal to be set for the user; selecting a set of conversation content elements for communication to the user in the conversation, based on the determined context and the determined goal; and determining a first order in which the conversation content elements are to be presented to the user, based at least on the determined goal.

In some embodiments, the method may further comprise delivering the selected set of conversation content elements and an indication of the determined first order, for presentation to the user.

The method may further comprise receiving a user input; analyzing the user input; and arranging the conversation content elements into a second order based on the analyzed user input.

In some embodiments, the method may further comprise obtaining a user profile associated with the user. At least one of: determining a goal and selecting a set of conversation content elements may be based on the user profile.

The method may, in some embodiments, further comprise determining, based on the user profile, a user behavior modification technique, the user behavior modification technique being a technique for modifying the behavior of the user.

According to a third aspect of the invention, there is provided an apparatus for generating conversation content for communication with a user. The apparatus comprises a memory comprising instruction data representing a set of instructions; and a processor configured to communicate with the memory and to execute the set of instructions, wherein the set of instructions, when executed by the processor, cause the processor to determine a context of a conversation to be held with the user; determine a goal to be set for the user; select a set of conversation content elements for communication to the user in the conversation, based on the determined context and the determined goal; and determine a first order in which the conversation content elements are to be presented to the user, based at least on the determined goal.

According to a fourth aspect of the invention, there is provided a computing device for enabling a user to take part in a conversation. The computing device comprises a display for displaying conversation content to the user; a user input for receiving an input from a user; and a processor configured to receive a set of conversation content elements generated by the system described above; receive an indication of a defined order in which the conversation content elements are to be presented to the user; and present at least one of the set of conversation content elements to the user in the defined order.

These and other aspects of the invention will be apparent from and elucidated with reference to the embodiments described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 is a schematic illustration of an example of a system for generating conversation content, according to embodiments of the invention;
Figure 2 is a schematic illustration of a further example of a system for generating conversation content, according to embodiments of the invention;
Figure 3 is a flowchart of an example of a method for generating conversation content, according to embodiments of the invention;
Figure 4 is a flowchart of a further example of a method for generating conversation content, according to embodiments of the invention;
Figure 5 is a flowchart of a further example of a method for generating conversation content, according to embodiments of the invention;
Figure 6 is a flowchart of a further example of a method for generating conversation content, according to embodiments of the invention;
Figure 7 is a flowchart of a further example of a method for generating conversation content, according to embodiments of the invention;
Figure 8 is a schematic illustration of an example of an apparatus for generating conversation content, according to embodiments of the invention; and
Figure 9 is a schematic illustration of an example of a computing device for enabling a user to take part in a conversation, according to embodiments of the invention.

### DETAILED DESCRIPTION OF THE EMBODIMENTS

Embodiments of the system disclosed herein provide an improved mechanism by which a human user can interact with an artificial conversational entity. The disclosed system provides conversation content specific to the user, based on a defined context and with a defined goal intended to be achieved as a result of the conversation. The system is intended to use pre-scripted conversation content, which can be arranged in numerous ways to form bespoke content to be communicated with the user. Thus, the conversation with the user can be dynamic, and responsive to the user inputs, while being tailored to a particular subject, or context, and converging towards a defined end goal.

Aspects of the present invention are described in terms of a system, a method, an apparatus and a computing device. The system may be implemented as a collection of computer software modules configured to operate on a computer system, such as a desktop computer, a laptop computer, a tablet computer or a smartphone. In some embodiments, the system may be implemented over multiple computing devices or servers, and may be implemented partly or fully in a cloud computing environment.

The system may form part of, or work in conjunction with, a clinical program and/or a coaching plan, either or both of which might form part of a health management system. A health management system is a computer-based system that allows a user to monitor aspects of their health, record data and statistics relating to aspects of their health, and receive information relating to aspects of their health, for example in the form of advice or comments which may be delivered to a device of the user, such as a smart phone. In some examples, the health management system may deliver content to the user relating specifically to them (e.g. based on a user profile), relating to their surroundings, and/or relating to general health matters and/or health matters specific to the user.

A clinical program is a medical program intended to provide medical information to a user, for example information about things a user should do after enduring a surgical procedure. The user may, for example, be advised that they should eat particular foods at particular times for certain period of time following an operation. A coaching plan may also provide information to the user. The coaching plan may advise a user about how to achieve a particular goal, rather than providing fact-based advice. For example, a coaching plan associated with a user who is trying to lose weight may provide the user with advice to consume smaller portions at meal times, or to eat foods containing less sugar. The coaching plan may additionally or alternatively provide content to the user which is intended to encourage the user to exercise more, or walk more instead of driving. In this way, the coaching plan may be considered to be concerned more about providing behavioral motivation to the user, and motiving the user to change particular aspects of their behavior to help them to achieve a goal.

The system disclosed herein can work with the clinical program and/or the coaching program to generate a bespoke conversation to be initiated with the user regarding an aspect of the clinical program or coaching plan, so that a more in depth discussion maybe had, or so that information relating to a particular aspect may be provided or obtained by the system.

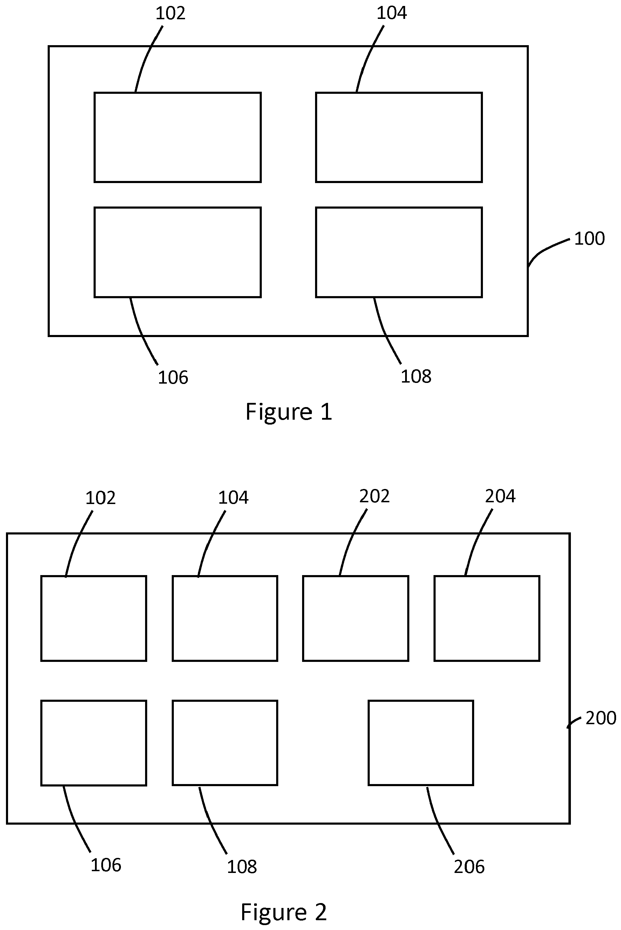

Referring to the drawings, Figure 1 shows, schematically, an example of a system 100 for generating conversation content for communication with a user. The system 100 comprises a context determination module 102 for determining a context of a conversation to be held with the user. A "context" as used herein, can be considered to be a theme or subject on which a conversation is to be based. The context may be determined based, for example, on a topic or event relating to the user's clinical program and/or coaching plan. For example, a user's clinical program may ask the user to input their weight on a daily basis as a part of a weight-loss program. However, the user may intentionally or unintentionally neglect to provide their weight to the clinical program for one or more days. The coaching plan associated with the user may provide motivation to the user each day in an attempt to change the user's behavior to encourage them to weigh themselves daily. Thus, the context in this example is the user not providing a daily weight measurement.

The system 100 further comprises a goal determination module 104 for determining at least one goal to be set for the user. A goal may be determined based on the context. In the above example, the goal determined by the goal determination module 104 may be to have the user commit to provide a daily weight measurement. In some examples, multiple goals may be determined. For example, the goal determination module may determine a first goal of having the user commit to providing a daily weight measurement, and a second goal of reducing the amount of high-sugar foods consumed. Thus, the goal may be determined based on the nature of the clinical program or the coaching plan associated with the user.

The system 100 further comprises a content selection module 106 for selecting a set of conversation content elements for communication to the user in the conversation, based on the determined context and the at least one determined goal. A plurality of conversation content elements may be stored in a storage medium, such as a memory device, associated with and accessible by the content selection module 106 of the system 100. The plurality of conversation content elements may include multiple sets, and one or more elements or one or more sets of elements may be associated with a particular context and/or with a particular goal. Thus, once a context of the conversation has been determined (e.g. by the context determination module 102), the content selection module 106 may retrieve from the plurality of conversation content elements, those conversation content elements which relate to or are relevant to the determined context. Similarly, once a goal has been determined (e.g. by the goal determination module 104), the content selection module 106 may retrieve from the plurality of conversation content elements, those conversation content elements which relate to or are relevant to the determined goal.

A conversation content element may comprise a word, phrase, sentence, paragraph, or other portion of text which may form part of a dialogue, or conversation, either alone or in combination with one or more other conversation content elements. Thus, some conversation content elements may include generic content (e.g. text, wording or multimedia content, such as images, video or audio content), which can be relevant to multiple or all contexts or goals, while other conversation content elements may include context-specific or goal-specific content (e.g. text, wording or multimedia content, such as images, video or audio content), which is relevant only to particular contexts or goals. Each conversation content element may comprise a computer file, code or data, for example.

The conversation content elements may be considered to be represented by dialogue cards, where each card is a component of the system's input into the conversation. Multiple cards may be combined to form a sentence to be presented to the user.

The conversation content elements may be grouped in various ways. The conversation content elements may be grouped by the part of the conversation in which they are intended to be used. For example, a first group may comprise initiation elements, which are intended to start the conversation, introduce the system 100 to the user, put the user at ease and/or encourage the user to engage in the conversation. A second group may comprise continuation elements, which are intended to continue the conversation, provide the user with information relevant to the determined context and/or the goal to be achieved. A third group may comprise conclusion elements, which are intended to conclude the conversation, and may summarize the conversation that has taken place, and/or provide a conclusion of the outcome of the conversation. For example, the conclusion elements may include a table outlining the facts that have been discussed, and a statement of what has been agreed or undertaken by the user.

Thus, the conversation content elements selected by the content selection module 106 may comprise at least one initiation element, at least one continuation element, and at least one conclusion element. The at least one conclusion element may comprise at least one of a summary of the conversation content of the conversation content elements and an indication of the determined goal. The conclusion elements may be incorporated into the conversation once the user has committed to performing a particular task, or changing their behavior in a particular way (i.e. once the goal has been achieved).

The conversation content elements may additionally or alternatively be grouped by a type of outcome they are intended to achieve. For example, 'education' elements are intended to educate the user about a particular aspect, 'insight' elements are intended to provide insight to the user about a particular aspect, 'question' elements are intended to request information from the user, 'dialogue' elements are intended provide general wording or phrases to maintain the conversation, 'option' elements are intended to provide the user with a set of options or choices, and 'service recommendation' elements are intended to provide the user with a recommendation of an external service that might help the user to achieve their goal. The above list is not exhaustive, and it will be appreciated that the conversation content elements may be classified differently, and with additional or alternative classifications or types. Conversation content elements that prompt a user to respond with a selection from a list of options or an answer to a question are worded in such a way that the user response can be predicted, or at least expected. Thus, the questions asked in the elements are not open-ended questions, but rather may have a finite number of possible answers. In this way, a suitable follow-up conversation content element can be selected and scheduled by the sequencing module 108 for each possible user response.

The conversation content elements may also include tags, which may, for example, be included as metadata, or as part of the text forming the conversation content. For example, a conversation content element which includes conversation content relating to salt intake and, more specifically, to reducing salt intake, may include tags relating to keywords in the content of that element, and/or tags such as "salt" included in metadata associated with the element. In this way, when the content determination module 106 searches the plurality of conversation content elements for elements relevant to salt, any element containing the term "salt" in its metadata, or containing the keyword "salt" in its content, will be selected.

The system 100 further comprises a sequencing module 108 for determining a first order in which the conversation content elements are to be presented to the user, based at least on the determined goal. The sequencing module 108 determines a provisional order in which the elements may be presented to the user. As discussed below, the order may change, and the elements may be presented in an order other than the determined first order. The sequencing module 108 uses the determined goal to be achieved by the user to establish the most appropriate way of ordering the conversation content elements such that the conversation leads to an intended conclusions (i.e. resulting in the user committing to the goal).

The sequencing module 108 and/or the content selection module 106 may, in some embodiments, base the selection of content and/or the sequencing of content on an intended structure, or progression of the conversation to be held with the user. The intended progression of the conversation may involve multiple progression nodes, each node acting as a checkpoint to be met before the conversation may progress to the next node, or checkpoint. Each progression node may be referred to as an 'intent', or a 'sub-goal', such that the conversation content may comprise multiple intents. During the course of an intended conversation, numerous intents may be present, each intent forming a sub-goal that contributes towards the ultimate goal as determined by the goal determination module 104. For example, one intent may be to have the user recognize that they have failed to adhere to a requirement in their clinical program or coaching plan (e.g. recognize that they have failed to submit weight measurements); a further intent may be to have the user recognize that the failure is due to a particular behavior or aspect of their behavior; a further intent may be to have the user recognize that changing their behavior will result in a positive outcome for them (i.e. for their health); a further intent may be to have the user recognize that a goal of changing their behavior is feasible and achievable; a further intent may be to have the user set a goal, or at least feel like they have proposed a goal; and a further intent may be to have the user recognize that monitoring the goal as they progress towards the goal using their coaching plan will help them to achieve the goal. The intents may be determined as part of the determination of the goal by the goal determination module 104. The selection of conversation content elements by the content selection module 106 and the determination of the order of the elements by the sequencing module 108 may be performed based on the intents, such that the intents are achieved as the intended conversation progresses towards the goal.

Figure 2 shows, schematically, an example of a system 200 for generating conversation content for communication with a user. The system 200 may comprise one or more of the features 102 to 108 discussed above. The system 200 may comprise a user behavior modification module 202 for determining a technique for modifying a behavior of the user. The determined behavior modification technique may be used by at least one of: the content selection module 102 in selecting the set of conversation content elements, and the sequencing module 106 in determining the first order of the conversation content elements. A behavior modification technique is a method that may be used to modify a user's behavior. For example, in relation to the intended goal of having the user commit to weighing themselves daily, the behavior that it is intended to modify is the user's behavior regarding their failure to submit daily weight measurements. In some embodiments, the selection and/or ordering of conversation content elements may be based on a behavior modification technique related to the user. For example, the system 100, 200 may have knowledge of a behavior modification technique associated with the user from the clinical program or the coaching program. Therefore, the behavior modification technique maybe taken into account when selecting and/or ordering the conversation content elements.

A behavior modification technique may be a preferred method of modifying the user's behavior to achieve a goal. For example, some users may be more susceptible to changing their behavior if they are fully aware of facts relevant to the situation. In such examples, an appropriate behavior modification technique might involve presenting a set of facts to the user, then asking them to change their behavior (e.g. asking that they submit daily weight measurements). Other users may be more susceptible to changing their behavior if they are made aware of other people making similar changes. Thus, in some examples, the behavior modification technique might involve informing the user of success stories of other users (e.g. patients) in a similar situation or with a similar medical profile.

The behavior modification techniques may include established methods which are known to be effective in causing a change in behavior for a particular type of person in a particular environment or situation, or responsive to a particular behavior observation.

In some embodiments, the context determination module 102 may be configured to determine the context of the conversation based on at least one of: a user profile of the user and the nature of a trigger event. The user profile may be available to the system 100, 200 from the clinical program and/or the coaching plan associated with the user. From the user profile, it may be apparent that the user is suffering from a particular illness and that this illness should form the basis of, or at least a topic of, the conversation. The user profile may also include information on which a behavior modification technique may be determined. A trigger event may comprise an event that leads to the generation of the conversation by the system 100, 200. For example, if a user is following a clinical program to help them lose weight, a failure to submit one or more daily weight measurements, might act as a trigger event which prompts the system 100 to start generating the conversation content. The nature of the trigger event might then be taken into account when determining the context. For example, the failure to submit a daily weight measurement might lead to the subject or context of the conversation relating to the importance of weight loss.

The sequencing module 108 may, in some embodiments, be configured to determine the first order of the conversation content elements based on at least one of: the determined context, and a user profile associated with the user. Thus, in addition to using a user profile to determine the context of the conversation, as discussed above, a user profile associated with the user may also be used in determining the order in which the conversation content elements should be presented to the user. For example, the user profile might indicate that little is known about the user's medical history and, therefore, the conversation content elements may be ordered in such a way that relevant questions may be asked at an early stage of the conversation, in order to gain a better understanding of the user.

The system 200 may comprise a delivery module 204 for delivering the selected set of conversation content elements and an indication of the determined first order, for presentation to the user. The system 100, 200 may, in some embodiments, be remote from the user, such that the system performs its functions in a computing device, or in the cloud, for example, at a first location, and the user is located remote from the system at a second location. In this way, the conversation content may be selected and arranged into a first order, then delivered to the user in a format suitable for execution by a user device. For example, the conversation content elements and the indication of the determined first order may be delivered as a self-contained executable module or file, or as computer-readable code. In some embodiments, the indication of the first order of the elements may be embodied as computer logic describing how the conversation is to be executed. The logic, which may be referred to as execution logic, may be in the form of a set of rules, for example in a Domain Specific Language Rules (DSLR) format (i.e. a Drools rule engine logic format) or in an XML format. In this way, the data (i.e. the conversation content elements) needed to form the dialogue and the means for ordering the elements can be delivered to the user device where the conversation can be executed independently of the system 100, 200. Thus, the conversation may be presented to the user via the user device without the need for the system 100, 200, and the conversation may be presented while the user device is in an offline mode (e.g. not connected to the internet).

In some embodiments, the system 200 may comprise a user input analysis module 206 for analyzing a received user input. A user input may comprise words, a phrase, a sentence or a comment in written or spoken form, for example, which may be input into the user device. In some embodiments, the user input may be provided in response to some conversation content generated by the system 100, 200 and presented to the user. In response to receiving a user input, the user input analysis module 206 may analyze the input and determine whether or not the next conversation content element or set of elements due to be presented to the user (e.g. in accordance with the determined first order) are still relevant. If they are still relevant based on the user input, then the conversation may continue according to the first order. However, if, based on the user input, it is determined that the planned next conversation content element should not be presented, then the first order maybe changed. Such a change in the planned first order may be planned for in advance, by the sequencing module 108. For example, the sequencing module 108 may prepare multiple orders in which the conversation content elements may be presented, depending on the possible inputs that may be made by the user. The various combinations of elements, and the various orders of presentation may be delivered to the user device as part of the execution logic, so that any reordering that may be necessary can be performed by the user device, without the need for further communication with the system 100, 200. The execution logic may include a set of rules defining how the content is to be presented based on various conditions. For example the set of rules may include an indication of how the conversation content elements are to be ordered (or re-ordered) in response to a range of possible user inputs. Therefore, in some embodiments, the re-ordering of the elements may be performed at a user device, based on predefined instructions relating to a plurality of potential user responses. In other embodiments, however, the sequencing module 108 may be configured to determine a second order of the conversation content elements based on the analyzed user input.

So far, scenarios have been described in which the goal determination module 104 determines a single goal, which is a goal to be achieved by the end of the conversation (e.g. have the user commit to changing their behavior in some way). However, in some embodiments, the goal determination module 104 may be configured to determine a plurality of goals for the user. The sequencing module 108 may be configured to arrange the conversation content elements into an order different from the first order when a first goal of the plurality of goals has been communicated to the user. The goals may be considered to be 'checkpoints' at stages during the conversation to be held with the user, and each goal may comprise an intent, as discussed above. If a goal is achieved (e.g. the user agrees to make a particular change), then the conversation content elements may be presented in such a way as to progress towards the next goal in the conversation. The order of the elements necessary to achieve each goal may be determined in advance by the sequencing module 108, and included in the rules or execution logic delivered to the user for execution. In one example, the goals may become more challenging as the conversation progresses, such that the user meets the early goals easily, which might persuade them the meet the later, more challenging goals.

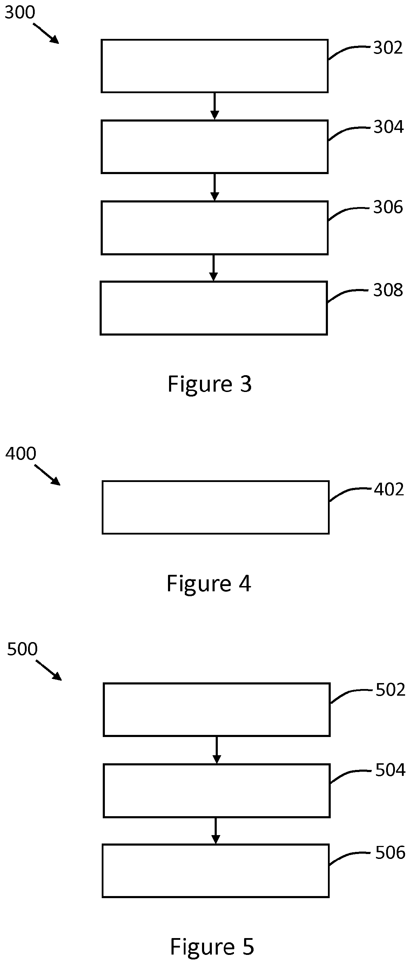

A further aspect of the invention relates to a method for generating conversation content. Figure 3 shows a flowchart of an example of a computer-implemented method 300 for generating conversation content for communication with a user. The method 300 maybe performed, for example, by the system 100, 200 described above. The method 300 comprises, at step 302, determining a context of a conversation to be held with the user. The context of the conversation may be determined based on various factors, as discussed above. At step 304, the method 300 comprises determining a goal to be set for the user. As noted above, numerous factors may be taken into account when determining the goal. The method 300 comprises, at step 306, selecting a set of conversation content elements for communication to the user in the conversation, based on the determined context and the determined goal. The conversation content elements may selected from a plurality of elements stored, for example, in a database in a suitable storage medium. At step 308, the method 300 comprises determining a first order in which the conversation content elements are to be presented to the user, based at least on the determined goal.

Figure 4 shows a flowchart of a further example of a computer-implemented method 400 for generating conversation content for communication with a user. The method 400 may comprise one of more of the steps of the method 300 described above. The method 400 may comprise, at step 402, delivering the selected set of conversation content elements and an indication of the determined first order, for presentation to the user. The step of delivering may comprise sending the elements and, for example, execution logic describing the manner in which the elements are to be presented, to a user device, where the conversation elements are presented to the user.

A further example of a computer-implements method 500 is shown in the flow chart of Figure 5. The method 500 may comprise one of more of the steps of the methods 300, 400 described above. The method 500 may comprise, at step 502, receiving a user input. The user input may be made, for example, via a user input interface on a user device associated with the user. At step 504, the method may comprise analyzing the user input. Such analysis may be performed, for example, by the user input analysis module discussed above. The method may comprise, at step 506, arranging the conversation content elements into a second order based on the analyzed user input. Thus, if the user input is such that the originally-planned next element is no longer appropriate, then the presentation order may be changed.

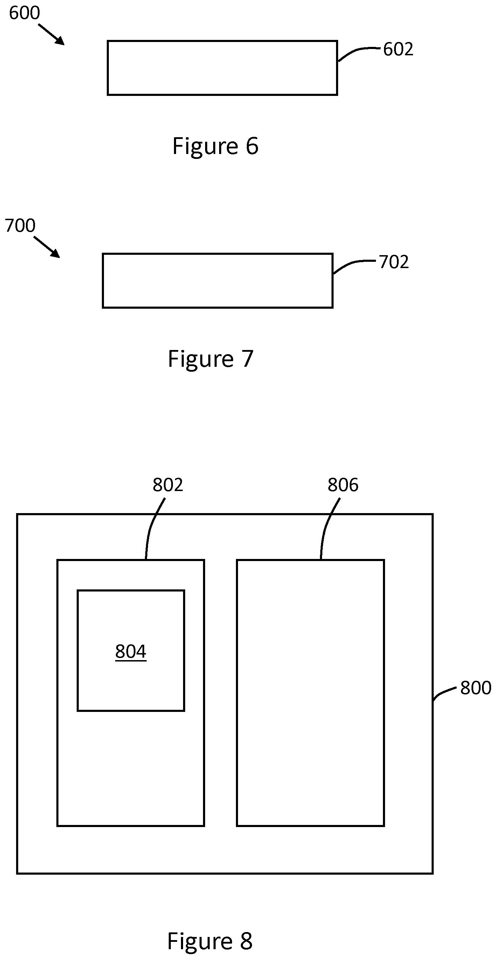

Figures 6 and 7 show flowcharts of further examples of computer-implemented methods 600, 700 for generating conversation content for communication with a user. The methods 600, 700 may comprise one or more of the steps of the methods 300, 400, 500 described above. The method 600 may comprise, at step 602, obtaining a user profile associated with the user. At least one of: determining a goal and selecting a set of conversation content elements may be based on the user profile. The method 700 may comprise, at step 702, determining, based on the user profile, a user behavior modification technique, the user behavior modification technique being a technique for modifying the behavior of the user.

A further aspect of the invention relates to an apparatus for generating conversation content. Figure 8 shows, schematically, an apparatus 800 for generating conversation content for communication with a user. The apparatus 800 may comprise a computing device, for example. The apparatus comprises a memory 802 comprising instruction data representing a set of instructions 804; and a processor 806 configured to communicate with the memory and to execute the set of instructions. The set of instructions 804, when executed by the processor 806, cause the processor to: determine a context of a conversation to be held with the user; determine a goal to be set for the user; select a set of conversation content elements for communication to the user in the conversation, based on the determined context and the determined goal; and determine a first order in which the conversation content elements are to be presented to the user, based at least on the determined goal. In general, the processor 806 of the apparatus 800 may be configured to perform any of the methods described herein.

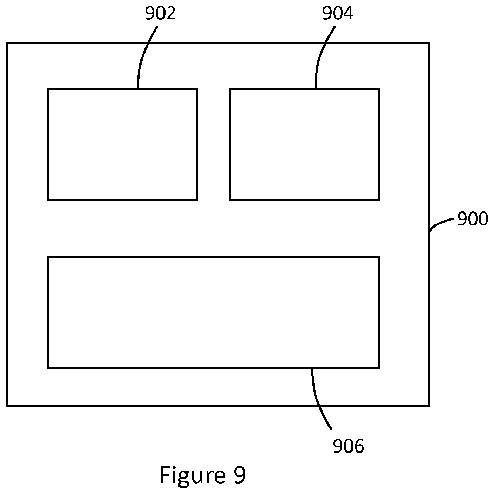

A further aspect of the invention relates to a computing device for enabling a user to take part in a conversation. Figure 9 shows, schematically, an example of a computing device 900 for enabling a user to take part in a conversation. The computing device 900 comprises: a display 902 for displaying conversation content to the user; a user input 904 for receiving an input from a user; and a processor 906. The processor 906 is configured to receive a set of conversation content elements generated by the system 100, 200 described above. The processor 906 is further configured to receive an indication of a defined order in which the conversation content elements are to be presented to the user. The processor 906 is further configured to present at least one of the set of conversation content elements to the user in the defined order. The computing device 900 may comprise, for example, a desktop computer, a laptop computer, a table computer, a smart phone or a smart watch.

In some embodiments, the computing device 900 may comprise a rule engine for executing arranging the conversation content elements in the order set out in the execution logic. In some embodiments, such arranging may be performed by the processor 906. If a user response is received by the computing device 900, for example in response to a question in one of, or a combination of, the conversation content elements presented to the user, then the order in which the next elements are to be presented may be predefined and set out in the execution logic. Alternatively, the processor 906 may determine the next element to be presented using pattern matching techniques (e.g. matching suitable elements to the next intent to be achieved in the conversation).

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A system (100) for generating conversation content for communication with a user, the system comprising:
a context determination module (102) for determining a context of a conversation to be held with the user;
a goal determination module (104) for determining at least one goal to be set for the user;
a content selection module (106) for selecting a set of conversation content elements for communication to the user in the conversation, based on the determined context and the at least one determined goal; and
a sequencing module (108) for determining a first order in which the conversation content elements are to be presented to the user, based at least on the determined goal.

2. The system (100, 200) according to claim 1, further comprising:
a user behavior modification module (202) for determining a technique for modifying a behavior of the user;
wherein the determined behavior modification technique is used by at least one of: the content selection module (106) in selecting the set of conversation content elements, and the sequencing module (108) in determining the first order of the conversation content elements.

3. The system (100, 200) according to claim 1 or claim 2, further comprising:
a delivery module (204) for delivering the selected set of conversation content elements and an indication of the determined first order, for presentation to the user.

4. The system (100) according to any of the preceding claims, wherein the context determination module (102) is configured to determine the context of the conversation based on at least one of: a user profile of the user and the nature of a trigger event.

5. The system (100) according to any of the preceding claims, wherein the sequencing module (108) is configured to determine the first order of the conversation content elements based on at least one of: the determined context, and a user profile associated with the user.

6. The system (100) according to any of the preceding claims, further comprising:
a user input analysis module (206) for analyzing a received user input.

7. The system (100) according to claim 6, wherein the sequencing module is configured to determine a second order of the conversation content elements based on the analyzed user input.

8. The system (100) according to any of the preceding claims, wherein the goal determination module (104) is configured to determine a plurality of goals for the user; wherein the sequencing module (108) is configured to arrange the conversation content elements into an order different from the first order when a first goal of the plurality of goals has been communicated to the user.

9. A computer-implemented method (300) for generating conversation content for communication with a user, the method comprising:
determining (302) a context of a conversation to be held with the user;
determining (304) a goal to be set for the user;
selecting (306) a set of conversation content elements for communication to the user in the conversation, based on the determined context and the determined goal; and
determining (308) a first order in which the conversation content elements are to be presented to the user, based at least on the determined goal.

10. The computer-implemented method (300, 400) according to claim 9, further comprising:
delivering (402) the selected set of conversation content elements and an indication of the determined first order, for presentation to the user.

11. The computer-implemented method (300, 500) according to claim 9 or claim 10, further comprising:
receiving (502) a user input;
analyzing (504) the user input; and
arranging (506) the conversation content elements into a second order based on the analyzed user input.

12. The computer-implemented method (300) according to any of claims 9 to 11, further comprising:
obtaining (602) a user profile associated with the user;
wherein at least one of: determining a goal and selecting a set of conversation content elements is based on the user profile.

13. The computer-implemented method (300) according to claim 12, further comprising:
determining (702), based on the user profile, a user behavior modification technique, the user behavior modification technique being a technique for modifying the behavior of the user.

14. An apparatus (800) for generating conversation content for communication with a user, the apparatus comprising:
a memory (802) comprising instruction data representing a set of instructions (804); and
a processor (806) configured to communicate with the memory and to execute the set of instructions, wherein the set of instructions, when executed by the processor, cause the processor to:
determine a context of a conversation to be held with the user;
determine a goal to be set for the user;
select a set of conversation content elements for communication to the user in the conversation, based on the determined context and the determined goal; and
determine a first order in which the conversation content elements are to be presented to the user, based at least on the determined goal.

15. A computing device (900) for enabling a user to take part in a conversation, the computing device comprising:
a display (902) for displaying conversation content to the user;
a user input (904) for receiving an input from a user; and
a processor (906) configured to:
receive a set of conversation content elements generated by the system of any of claims 1 to 8;
receive an indication of a defined order in which the conversation content elements are to be presented to the user; and
present at least one of the set of conversation content elements to the user in the defined order.
